# EUROPÄISCHE PATENTSCHRIFT

(11) **EP 0 663 114 B1**
(45) Veröffentlichungstag und Bekanntmachung des Hinweises auf die Patenterteilung: **14.05.1997**
(21) Anmeldenummer: 93920584.5
(22) Anmeldetag: 28.09.1993
(51) Int. Cl.: H02H 3/05

(54) **ANORDNUNG VON DIGITALEN SCHUTZRELAIS**
DIGITAL PROTECTIVE RELAY ARRANGEMENT
AGENCEMENT DE RELAIS DE PROTECTION NUMERIQUES

(30) Priorität: 30.09.1992 AT 1933/92
(43) Veröffentlichungstag der Anmeldung: 19.07.1995
(73) Patentinhaber: ELIN ENERGIEVERSORGUNG GESELLSCHAFT m.b.H., 1141 Wien (AT)
(72) Erfinder: SCHREIBER, Klaus, A-1210 Wien (AT); WENDL, Kurt, A-1140 Wien (AT)
(74) Vertreter: Krause, Peter
(86) Internationale Anmeldenummer: AT9300148
(87) Internationale Veröffentlichungsnummer: WO9408379

(56) Entgegenhaltungen:
- EP-A- 0 373 347
- DE-A- 3 614 552

## Beschreibung

Die Erfindung betrifft die Anordnung von digitalen Schutzrelais.

Bisherige Schutzrelais sind für eine einzige bestimmte Schutzfunktion konstruiert. Durch die Digitaltechnik wurde die Realisierung mehrerer Schutzfunktionen auf einer Rechnereinheit ermöglicht. Dabei mußten die Teilfunktionen eines Schutzrelais den einzelnen Gerätekomponenten zugeteilt werden. Der Ausfall eines derartig ausgeführten Schutzrelais bedeutete den Verlust sämtlicher Schutzfunktionen.

Eine gewünschte Erhöhung der Sicherheit von Schutzrelais wurde gewöhnlich durch die Überlappung der Funktionen mehrerer Relais oder durch Verdoppelung ganzer Relais erreicht.

Der dazugehörige Projektierungsaufwand ist dementsprechend hoch und die Realisierung benötigte eine kostspielige Gerätetechnik. Derartige Ausführungen sind daher nur bei großen Blöcken oder Blöcken mit besonderer Wichtigkeit rentabel.

Darüber hinaus ist aus der EP-A 373 347 eine Einrichtung zum Schutz eines elektrischen Betriebsmittels bekannt, das die Redundanz bei Rechnernetzwerken erhöht. Aus der DE-A 3614 552 ist ein Schutzschaltgerät der Installationstechnik bekannt, wie beispielsweise ein Differenzstromschutzschalter oder Leitungsschutzschalter, der mit elektronischen Bauteilen arbeitet. Dabei sind für die elektronischen Bauteile reduntante Bauteile oder solche für die Eigenüberwachung vorgesehen.

Aufgabe der vorliegenden Erfindung ist es, einerseits die obigen Nachteile zu vermeiden und anderseits eine wirtschaftliche Anordnung von digitalen Schutzrelais auch für kleine Anlagen zu schaffen.

Die vorliegende Erfindung ist dadurch gekennzeichnet, daß mindestens zwei Verarbeitungseinheiten vorgesehen sind, wobei jede Verarbeitungseinheit für die Schutzfunktionen erforderlichen Teilfunktionen, insbesondere die Eingabe, Verarbeitung und Ausgabe von Analog- und/oder Binärsignalen aufweist, daß mindestens ein Eingangswandlerpanel für die gleichzeitige Anspeisung von zwei Verarbeitungseinheiten vorgesehen ist, daß zur Speisung von mindestens einer Verarbeitungseinheit eine Doppel-Stromversorgungseinheit, bei der jeder Ausgang für die Gesamtleistung ausgelegt ist, vorgesehen ist und daß die Verdrahtung von Verarbeitungseinheit zum Eingangswandlerpanel durch Steckverbindungen erfolgt.

Mit der Erfindung ist es erstmals möglich ein redundantes Schutzrelaissystem zu schaffen, das wirtschaftlich bei allen Anlagen einsetzbar ist. Einerseits entfällt der hohe Projektierungsaufwand und anderseits beschränkt sich die Gerätetechnik auf quasi Universalelemente. Durch die Doppelstromversorgungseinheit ist eine Erweiterung der Redundanz gegeben. Eine weitere Erhöhung der Betriebssicherheit ist die Folge. Entsprechend der einfachen Verdrahtungsart sind die Universalelemente jederzeit ohne aufwendige Montagearbeiten anschließbar bzw. austauschbar.

Mit der erfindungsgemäßen Anordnung kann also von der minimalsten Ausführung nämlich einem Eingangswandlerpanel, eine Verarbeitungseinheit und einer Stromversorgungseinheit, die gewünschte Redundanz durch Verdopplung der Universalelemente, allein durch das Stecken der Verbindungen in die dafür vorgesehenen Steckplätze, erreicht werden.

Die Erfindung wird an Hand von Ausführungsbeispielen, die in der Zeichnung dargestellt sind, näher erläutert. Fig. 1 zeigt den Minimalstausbau, Fig. 2 eine weitere Konfiguration und Fig. 3 den Vollausbau.

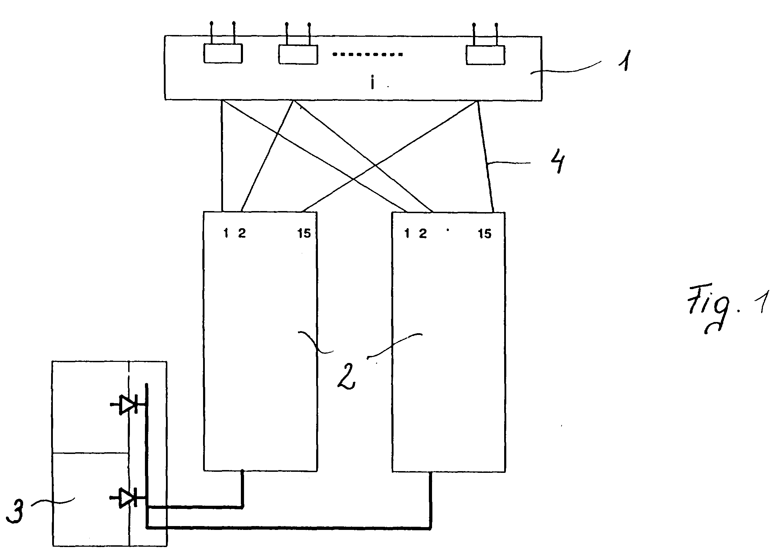

Gemäß der Fig. 1 ist eine Eingangswandlerpanel 1 und zwei Verarbeitungseinheiten 2 sowie eine Stromversorgungseinheit 3 vorgesehen. Durch die gleiche Ausführung der beiden Verarbeitungseinheiten kann bereits eine doppelte Sicherheit der Teilfunktionen wie Eingabe, Verarbeitung und Ausgabe von Signalen erreicht werden.

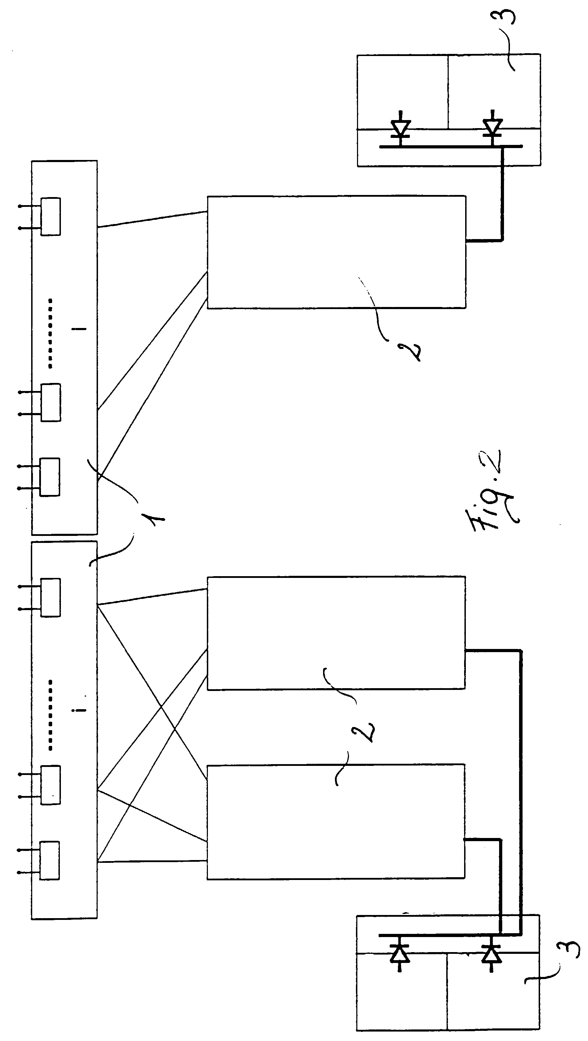

Gemäß Fig. 2 sind zwei Eingangswandlerpanele 1 zur Versorgung eines Schaltungsbereiches vorgesehen. Ein Eingangswandlerpanel 1 weist zwei Verarbeitungseinheiten 2 mit einer Stromversorgungseinheit 3 auf und das zweite Eingangswandlerpanel 1 eine Verarbeitungseinheit 2 mit einer Stromversorgungseinheit 3 auf.

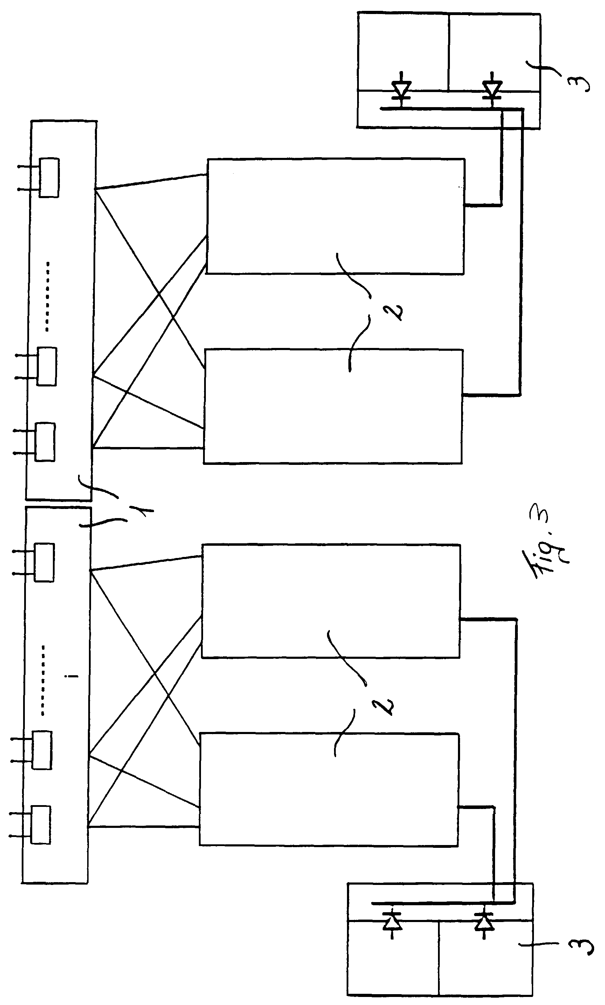

Entsprechend der Fig. 3 ist der Vollausbau erreicht. Es werden zur Versorgung eines Schaltungsbereiches zwei Eingangswandlerpanele 1 vorgesehen, denen je zwei Verarbeitungseinheiten 2 vorgeschaltet sind. Je zwei Verarbeitungseinheiten 2 werden von einer Stromversorgungseinheit 3 versorgt.

Durch die Redundanz der Universalelemente ist also, der entsprechende Sicherheitsfaktor zu erreichen.

## Patentansprüche

1. Anordnung von digitalen Schutzrelais dadurch gekennzeichnet, daß
- mindestens zwei Verarbeitungseinheiten (2) vorgesehen sind, wobei jede Verarbeitungseinheit (2) für die Schutzfunktionen erforderlichen Teilfunktionen, insbesondere die Eingabe, Verarbeitung und Ausgabe von Analog- und/oder Binärsignalen aufweist, daß
- mindestens ein Eingangswandlerpanel (1) für die gleichzeitige Anspeisung von zwei Verarbeitungseinheiten (2) vorgesehen ist, daß
- zur Speisung von mindestens einer Verarbeitungseinheit (2) eine Doppel-Stromversorgungseinheit (3), bei der jeder Ausgang für die Gesamtleistung ausgelegt ist, vorgesehen ist, und daß
- die Verdrahtung von Verarbeitungseinheit (2) zum Eingangswandlerpanel (1) durch Steckverbindungen (4) erfolgt.

## Claims

1. A digital protective relay arrangement, characterized
- in that at least two processing units (2) are provided, with each of said processing units (2) having partial functions necessary for the protective functions, especially for introducing, processing and outputting analogue and/or binary signals,
- in that at least an input converter pannel (1) is provided for simultaneously supplying two processing units (2),
- in that, for feeding at least one processing unit (2), a double current supply unit (3) is provided, wherein each output is designed for the total power thereof, and
- in that said processing unit (2) wiring to the input converter pannel (1) is carried out by plug-in connections (4).

## Revendications

1. Agencement de relais de protection numériques, caractérisé
- en ce que sont prévues au moins deux unités de traitement (2), chaque unité de traitement (2) présentant des fonctions partielles nécessaires aux fonctions de protection, notamment l'introduction, le traitement et la sortie de signaux analogiques et/ou binaires,
- en ce qu'est prévu au moins un panneau de convertisseur d'entrée (1) pour l'alimentation simultanée de deux unités de traitement (2),
- en ce que pour l'alimentation d'au moins une unité de traitement (2), est prévue une unité d'alimentation en courant double (3), dans laquelle chaque sortie est conçue pour la puissance totale, et
- en ce que le câblage de l'unité de traitement (2) vers le panneau de convertisseur d'entrée (1) est effectué par des connexions enfichables (4).
